# EUROPEAN PATENT SPECIFICATION

(11) **EP 3 504 969 B1**
(45) Date of publication and mention of the grant of the patent: **25.01.2023**
(21) Application number: 16869458.6
(22) Date of filing: 01.12.2016
(51) Int. Cl.: A01N 31/04, A01N 27/00, A01N 43/90, A01N 65/24, A01P 3/00

(54) **COMPOSITION FOR CONTROLLING FUNGAL INFECTION CAUSED BYNOSEMA CERANAE**
ZUSAMMENSETZUNG ZUR BEKÄMPFUNG VON DURCH BYNOSEMA CERANAE VERURSACHTEN PILZINFEKTIONEN
COMPOSITION POUR LUTTER CONTRE L'INFECTION FONGIQUE PARNOSEMA CERANAE

(30) Priority: 02.12.2015 CL 20153526
(43) Date of publication of application: 03.07.2019
(73) Proprietor: Universidad De Chile, Santiago (CL)
(72) Inventor: BRAVO GARRIDO, Jessica Andrea, Santiago (CL); DELPORTE VERGARA, Carla Luz, 830494 Santiago (CL); VALDOVINOS JELDES, Carlos Enrique, 5110693 Valdivia (CL)
(74) Representative: González Peces, Gustavo Adolfo
(86) International application number: PCT/CL2016/000075
(87) International publication number: WO 2017/091915

(56) References cited:
- MSC MARCIA ET AL: "Efectos antimicrobianos de extractos de plantas chilenas de las familias Lauraceae y Atherospermataceae Antimicrobial effects of extracts from Chilean plants of Lauraceae and Atherospermataceae families", REVISTA CUBANA DE PLANTAS MEDICINALES, vol. 17, 1 January 2012 (2012-01-01), pages 73-83, XP055387133,
- DANIA DI COSMO ET AL: "Insecticidal effect of Cryptocr", BOLETÍN LATINOAMERICANO Y DEL CARIBE DE PLANTAS MEDICINALES Y AROMÁTICAS, vol. 14, no. 2, 17 March 2015 (2015-03-17) , pages 1113-117, XP055603399, ISSN: 0717-7917
- DAMIANI NATALIA ET AL: "Laurel leaf extracts for honeybee pest and disease management: antimicrobial, microsporicidal, and acaricidal activity", PARASITOLOGY RESEARCH, SPRINGER VERLAG, BERLIN, DE, vol. 113, no. 2, 28 November 2013 (2013-11-28), pages 701-709, XP035355698, ISSN: 0932-0113, DOI: 10.1007/S00436-013-3698-3 [retrieved on 2013-11-28]
- BRAVO J ET AL: "Antifungal activity of the essential oil obtained fromCryptocarya albaagainst infection in honey bees byNosema ceranae", JOURNAL OF INVERTEBRATE PATHOLOGY, SAN DIEGO, CA, US, vol. 149, 14 August 2017 (2017-08-14), pages 141-147, XP085195040, ISSN: 0022-2011, DOI: 10.1016/J.JIP.2017.08.012
- AVELLO, M. et al.: "Efectos antimicrobianos de extractos de plantas chilenas de las familias Lauraceae y Atherospermataceae", Revista Cubana de Plantas Medicinales, vol. 17, no. 1 1 January 2012 (2012-01-01), pages 73-83, XP055387133, Retrieved from the Internet: URL:http://scielo.sld.cu/pdf/pla/v17n1/pla 08112.pdf [retrieved on 2017-03-16]
- DAMIANI, N. et al.: "Laurel leaf extracts for honeybee pest and disease management: antimicrobial, microsporicidal, and acaricidal activity", Parasitology research, vol. 113, no. 2, 28 November 2013 (2013-11-28), pages 701-709, XP035355698,
- TELASCREA, M. et al.: "Essential oils from leaves of Cryptocarya spp from the atlantic rain forest", Quimica Nova, vol. 31, no. 3, 1 January 2008 (2008-01-01), pages 503-507, XP055387136,
- PORRINI, M. et al.: "In vivo evaluation of antiparasitic activity of plant extracts on Nosema ceranae (Microsporidia)", Apidologie, vol. 42, no. 6, 1 November 2011 (2011-11-01), pages 700-707, XP055387142,
- PINTO, J. et al.: "Insecticidal activity of powder and essential oil of Cryptocarya alba (Molina) Looser against Sitophilus zeamais Motschulsky", Chilean journal of agricultural research, vol. 76, no. 1, 1 March 2016 (2016-03-01), pages 48-54, XP055387143,
- MONTES, M. et al.: "Chemical composition of essential oil of Cryptocarya alba (Mol.) Lauraceae", Annales Pharmaceutiques Francaises ( France), vol. 46, no. 1 1988, pages 41-47, XP002120732, Retrieved from the Internet: URL:https://www.researchgate.net/publicati on/19937133_Chemical_co mposition_of_the_essential_oil_of_Cryptoca rya_alba_Mol_Looser _Lauraceae_in_Chile? enrichld=rgreq-6f7c6c6b81bd9388ba68177c1 d325e40-XXX&enric hSource=Y292ZXJQYWdIOzE50TM3MTMzO0FTOjMxNT YwMzA zNjkwMTM3N0AxNDUyMjU3MDM1OTQ4&el=1_x_2&_es c=publ [retrieved on 2017-03-17]
- VILLAMIZAR, V.: "Metabolitos secundarios con actividad biológica (farmacológica), aplicación etnobotanica; y fitoquimica de algunas especies de los generos : Ocotea, Cryptocarya, Litsea, Caryodaphnosis, Machilus y Actinodaphne (Lauraceae)", Duazary, vol. 7, no. 1, 2010, pages 152-170, XP055387199,
- ARANEDA, X. et al.: "Distribution, epidemiological characteristics and control methods of the pathogen Nosema ceranae Fries in honey bees Apis mellifera L.(Hymenoptera, Apidae", Archivos de Medicina Veterinaria, vol. 47, no. 2 2015, pages 129-138, XP055387200, Retrieved from the Internet: URL:http://mingaonline.uach.cl/pdf/amv/v47 n2/art02.pdf [retrieved on 2017-03-17]

## Description

### SCOPE OF THE INVENTION

The scope of the present invention is a formulation and method to control fungal infections produced by the *Nosema ceranae* fungus affecting *Apis mellifera* bees, by applying an effective amount of an essential oil obtained from the leaves of *Cryptocaria alba,* (n.v. peumo), a Chilean endemic tree of the *Lauraceae* family.

### BACKGROUND OF THE INVENTION.

*Apis mellifera* bees are honey-producing bees. They are necessary for the effective pollination of crops and thus essential for world agriculture. They also produce products of economic importance, including honey, propolis, royal jelly and beeswax.

Bees are pollinating insects of tremendous economic value and ecological importance. Alterations in bee health lead to a reduction in vitality, productivity and pollination capacity, which affects the viability of beekeeping activity and biodiversity (Klein et al., 2007; Bradbear, 2009). Therefore, the treatment of infectious diseases is a key aspect of beekeeping to ensure that bees fulfill their role as food producers (Botiaset al., 2013), and as pollinators of various native crops and plants. Nosemosis (also known as nosema disease) is one of the most prevalent diseases affecting bees and is caused by two different species of microsporidia (pathogenic fungi). These include *Nosema Apis* (etiologic agent of type A nosemas) and *Nosema ceranae* (etiologic agent of type C nosemas), which cause the Depopulation Syndrome of Beehives, especially in the case of the latter. Both etiological agents produce almost 50% of the pathologies that occur in the hives located in the central-southern and southern areas of Chile, causing a decrease in honey production and reducing the population size of the hives, which can even lead to the death of the entire beehive (Keeling, 2002).

*Nosema* spp. has a greater relevance among the fungal diseases, both nationally and abroad. This is because it is an emerging pathogen that is present in every country with a beekeeping industry. It is highly contagious and easily spread, causing major economic damage (Keeling, 2002).

Fries (1993 and 2010) and Fries et al. (1997) point out that nosemosis, the fungal disease produced by *Nosema* spp., is considered one of the most dire diseases for beekeepers. Botias et al., (2009) report that nosemosis has become a growing problem for beekeepers worldwide. The harmful effects on production in the beekeeping sector include the following: (a) loss of adult bees, especially in late winter and early spring, (b) at least a 25% decrease in honey production, (c) up to a 50% increase in honey consumption in winter by bees, and (d) no production of royal jelly, so no good quality queens or healthy larvae can be produced (Peldoza, 2002). On the other hand, the productive life of bees is shortened and colony mortality rises in winter (Kleinschmidt and Furgunson 1989; Fries, 1993).

In Chile, *Nosema Apis* was detected for the first time in 1978, through tests conducted in the laboratories of the Agricultural and Livestock Service (SAG). A study carried out by Hinojosa and Gonzalez (2004) showed that in six districts of the coastal and inland sector of the VI Region, there was a recorded prevalence of *Nosema Apis* of 60 ± 6.9% in the spring of 1999, 14.3 ± 5% in the summer of 2000, 78.3 ± 5.8% in the spring of 2000 and 23 ± 6% in the summer of 2001.

A SAG report (2010) confirmed the presence of *Nosema Ceranae* in Chile in bee samples sent to the reference laboratory of the Marchámalo Beekeeping Research Center in Spain. Once the information from the SAG had been confirmed, Martinez *et al.* (2012), conducted a study in which the presence of this pathogen in Chile was detected. The study effectively described the presence of *Nosema ceranae* in the Bio-Bio region, which produces 42% of the country's honey. The study covered 4 of the region's provinces and gathered information from a total of 26 districts. 49% of them reported the presence of *Nosema Ceranae.*

In another study by Rodriguez *et al.* (2012), the authors concluded that viruses and *Nosema Ceranae* coexisted in apiaries in the Maule Region, affecting the hives. The three viruses detected were: (a) a virus causing acute paralysis in bees (ABPV), (b) a virus that attacks queen bees (BQCV) and (c) a virus that causes wing deformity in bees (DWV). The percentages of beehives affected by these viruses were 2%, 10% and 42% respectively.

A study carried out by Bravo *et al.* (2014) in collaboration with the Productive Alliance between the INDAP and Agro-Apicultura Limitada, showed the presence of *Nosema Ceranae* and the absence of *Nosema Apis* in the Valparaiso Region, specifically in the towns of Limache, San Antonio and La Ligua. The presence of *Nosema ceranae* in these localities could partly explain why, out of a total of 6,167 hives, 2,915 hives died, i.e. 47.3% of the hives disappeared. This situation was directly reflected in a drop in honey production per hive of 14.2 kg to 8.2 kg, a reduction of 42.4%. The presence of *Nosema Ceranae* was attributed to the lack of training in beehive sanitary handling and control.

Because of the fungal infection affecting the hives of *Apis Mellifera* bees, a variety of antifungal products have been tested worldwide against nosemosis. Fumagillin, derived from the fungus *Aspergillus Fumigates,* is the most widely used antibiotic against this fungal infection and considered the only effective one to combat it (Moffet *et al.,* 1969; Mutinelli, 2003; Bessi and Nanetti, 2005; Higes *et al.,* 2011).

However, prolonged use of fumagiline in beekeeping may contribute to the development of resistance to this drug (Huang et al., 2013). Furthermore, the use of this antibiotic is no longer permitted in most EU Member States, even though there are currently very few other alternatives to control this disease. Opinions regarding the use of fumagillin are controversial. On the one hand, according to some authors, even in places where fumagillin has been used there are problems of recurrence of the disease, since it seems to only kill the vegetative form of the parasite (MacDonald, 1978; Szabo and Heikel, 1987; Wyborn and McCutcheon, 1987). On the other hand, Liu (1973) suggests that fumagillin is capable of altering the membrane ultrastructure of young fungal spores. In countries where its use is permitted, concerns among beekeepers about costs and the possible presence of residues in honey have limited its use (Malone and Giacon, 1996).

It is therefore of great interest for the beekeeping sector to find a substitute for fumagillin, since various studies have shown a genotoxic and mutagenic action of this antibiotic under experimental conditions (Stevanovic et al., 2011), and therefore its negative impact on bee health cannot be ruled out.

Recent studies have shown possible short-term harmful effects on *Apis Mellifera* following treatment with fumagillin (Eischen *et al.,* 2012). On the other hand, Koch and Schmid-Hempel (2011) warn about the possibility of this antibiotic having harmful side effects on the bacterial flora of bees -and therefore on their defenses against certain pathogens-, considering that the intestinal microbiota is capable of forming an essential protective barrier against intestinal pathogens. A study by Peng (2001) showed that exposure of human lymphocytes to fumagillin at low concentrations causes a significant reduction in the proliferation of fumagillin, thus ending genotoxic risk to beekeepers and honey consumers. With regard to fumagiline residues in honey, Botias (2012) points to the urgent need to conduct studies on maximum residue limits of fumagiline in honey, within the context of food safety for humans. This research is essential to determine the safety of this product for consumers.

Because in most European countries the use of fumagillin and other antibiotics to treat sick bees is prohibited, it has been necessary to seek alternative solutions. Breeding bees that are tolerant or resistant to this pathogen has been proposed as an alternative (Malone and Giacon, 1996). Studies regarding variation and heritability of honeybee response to *N. Apis* have suggested that improvements can be made through breeding selection (Rinderer and Syvester, 1978; Rinderer *et al.,* 1983). To determine whether the introduction of *Apis Mellifera* subsp. *Carnica* from Australia has an effect on *N. Apis's* impact on *A. Mellifera* subsp. *Mellifera* and *A. mellifera* subsp. *ligustica* of New Zealand, researchers Malone *et al.,* (1996), inoculated these three breeds with *N. Apis.* Their results showed that *N. Apis* significantly reduces the lifespan of the bee breeds used in this study, with no significant differences between the three breeds in terms of longevity.

A series of measures have been suggested to prevent or slow down the development of nosemosis. Maistrello *et al.* (2008) recommend locating hives in non-humid areas, using non-contaminated equipment and fumigating hive cells with acetic acid to eliminate *Nosema Apis* spores.

In view of the harmful consequences affecting bee colonies infected by *N. Ceranae* and in the light of the high prevalence and severe pathological action of *Nosema spp.* in *Apis Mellifera,* it is essential to find new therapeutic agents to combat this dangerous disease and to halt its spread by providing an adequate solution to this problem in the beekeeping sector worldwide.

A different approach to the treatment of nosema has recently emerged, geared toward the search for solutions between substances of natural origin, such as Nozevit^{®}, Protofil^{®}, Vitafeed Gold^{®} and Api Herb^{®}, all of which consist of plant extracts or essential oils from the native flora of the place of origin. Each product has been tested for effectiveness against the variety of *Nosema spp.* and other fungal agents affecting bees at their place of origin, with acceptable results for all of them (Chioveanu *et al.,* 2004).

On the other hand, Maistrello *et al.,* (2008) found significant effects of thymol and resveratrol in reducing the spore load of Nosema ceranae in laboratory studies.

It is worth noting that the absence of Nozevit^{®}, Protofil^{®}, Vitafeed Gold^{®} and Api Herb^{®} in our national market is mainly due to the high costs associated with importing them.

Botias (2012) assessed the efficacy of three possible therapeutic agents for the treatment of nosema in melliferous bee colonies, comparing their action with fumagillin, whose efficacy in the control of nosema has been previously demonstrated in laboratory tests. The products tested were Nosestat^{®} (based on mint, iodine and formic acid tincture), and Vitafeed Gold^{®} (based on Beta vulgaris). None of the products were effective against *Nosema spp.* in on-site trials made directly on the hives, as they continued to present infection by *Nosema spp.* after application.

The present invention features a veterinary product based on an essential oil obtained from the leaves of the peumo tree (*Cryptocarya alba*)*,* used to treat nosemosis caused by *Nosema Ceranae.* This is an innovative product that contributes valuable knowledge of the pharmacotherapeutic properties of this Chilean plant species, which can in turn create a potentially valuable market in the beekeeping production chain.

The peumo is a perennial and endemic tree of Chile. It belongs to the Lauraceae family and is an important source of essential oil, which has been found to be active against microorganisms.

The chemical formulation of peumo contains several main components, which are found in its different organs. The bark has high tannin concentrations, as well as a unique alkaloid from the bark and its leaves, reticulin, which is present in other species of the same genus. Its leaves have an essential oil composed of p-cimol, α-pinene, linalol and limonene (Hoffmann et al, 1992).

The extraction of the essential oil from vegetable samples can be done through a variety of extraction techniques. The most commonly used are distillation through steam and hydro-distillation.

Steam distillation is a technique used to separate water-insoluble and slightly volatile organic substances from other non-volatile substances. This technique separates substances that are immiscible in water and that decompose at or near boiling temperature, so it is often used to separate natural essential oils found in the leaves, husks or seeds of some plants. The plant material, usually fresh and cut into small pieces, is placed in a closed container and subjected to streams of water vapor. The volatile compounds that are present in the sample are transported by the steam, which is later condensed and collected in a container, obtaining two phases of the liquid. One of them is the essential oil, which can be separated from the other phase. Essential oils are generally insoluble in water and less dense than water, which facilitates the separation of the organic phase obtained in the upper part of a U-tube or in a separating funnel. This technique, widely used in perfumery and cosmetics, is used to obtain fresh samples with thermolabile essential oils. It is used industrially because of its high yield, the purity of the resulting oil and because it does not require sophisticated technology.

The prior art suggests several methodologies to prevent or slow down the development of nosema. For example, patent EP 0869714 B1 describes a method to control various diseases in *Apis mellifera* beehives (such as beehives, honeycombs or similar containers where bee colonies build their breeding nests and store their food reserves), by applying an effective amount of a slow-release formulation composed of an active substance, which may be an essential oil extracted from plants or an organic acid. The essential oil or organic acid is selected from monoterpenes, natural oils or organic acids, such as menthol, geraniol, thymol, myrcene, citral, limonene, carene, camphor, eugenol, cineol, lemon oil, eucalyptus oil, neem oil, formic acid, acetic acid or oxalic acid, preferably thymol. The essential oil formulation is used to apply a method to control mites, lepidoptera, fungi, and bacterial infestations of bee colonies. However, this formulation is preferably used to control and attack varroasis, which is an infestation of bee colonies (*Apis mellifera*) with ectoparasitic mites belonging to the acaricides order (*Varroa jacobsoni*)*.* It also keeps in check other mite infestations, such as *Acarapis woodii* (tracheal mite) and *Tropilaelaps clareae;* infestations of lepidoptera, such as those of the major and minor wax moths, *Galleria mellonella* and *Achroia grisella,* respectively; infestations of diptera, such as *Braula caeca;* fungal infections, such as *Chalk Brood, Ascosphaera Apis* and bacterial infections, such as American and European foulbrood, *Bacillus larvae* and *Melissococcus pluton,* respectively, which can cause significant damage to the health of the bee colony.

Document WO 2008/132524 describes an apiary formulation that includes as active ingredients: (i) volatile oil and/or a component of a volatile oil selected from the group consisting of cinnamon oil, aniseed oil, hyssop oil, timol monoterpene, (ii) an aqueous-alcoholic extract of selected herbs such as thymus (*Thymus vulgaris*)*,* oregano (*vulgare Organum*)*,* walnut leaf (*Junglandis folium*) and oregano (*Organum majoranna*)*,* with known carriers and auxiliaries, preferably water and ethanol.

Regarding the biological activity of the essential oil extracted from the leaves of the peumo tree (*Cryptocarya alba),* the scientific publication entitled ***"***antimicrobial effects of extracts from Chilean plants of Lauraceae and Atherospermataceae families", Rev. Cubana Plant. Med. vol.17 no.1, 2012, describes a study on the Lauraceae and Atherospermataceae families, which are important sources of essential oils. This study was carried out on the Chilean species: *Cryptocarya alba* (Peumo), *Persea lingue* (Lingue) from the Lauraceae family and *Laurelia sempervirens* (Chilean laurel) from the Atherospermataceae family, and its objective was to assess the activity of their essential oils against microorganisms and provide information on their chemical formulation. The method used to extract the essential oils was by steam distillation from fresh plant material (plant leaves) and essential oils were obtained using a Clevenger device. Characterization and identification was done via CG-MS. Antimicrobial activity was assessed through antifungal assays by way of dilution in agar and vapor diffusion against *Penicillium sp* and *Fusarium oxysporum;* antibacterial assays by way of the well and paper method against *Escherichia coli, Bacillus subtillis, Pseudomonas aeruginosa* and *Staphyloccoccus aureus.* The results obtained in this study revealed that the essential oils of the 3 species under study had a selective effect against fungi and bacteria, which suggests that their different chemical nature could play a part in their action mechanism.

Damiani et al in Parasitology Research 2014, 113, 701-709 disclose the use of laurel leaf extracts to control *Nosema ceranae.*

### DETAILED DESCRIPTION OF THE INVENTION

The present invention describes a veterinary product of natural origin based on the essential oil obtained from the leaves of the peumo tree (*Cryptocarya alba),* used to treat nosema caused by *Nosema ceranae* and that affects *Apis mellifera* bees.

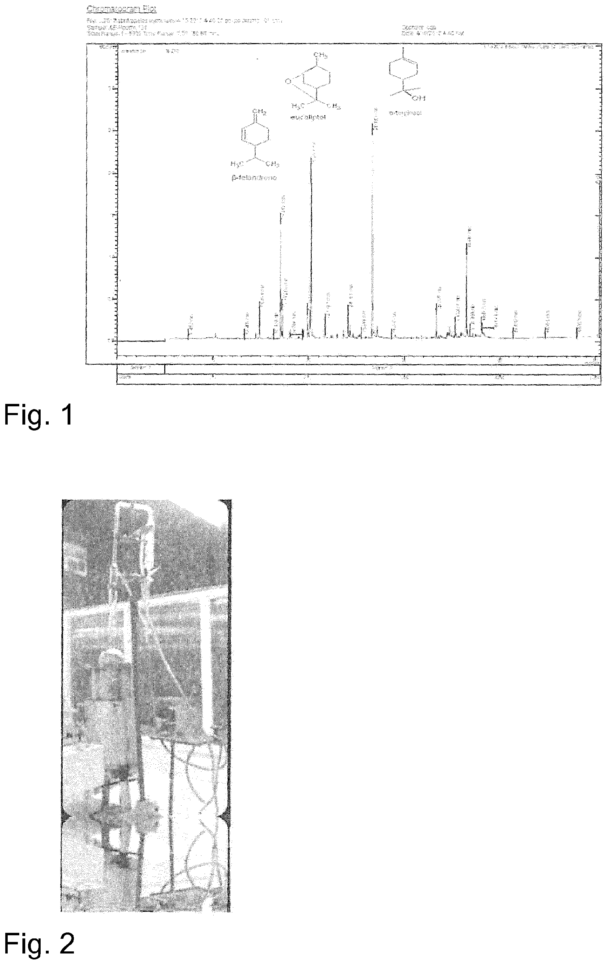

The first preferred embodiment of the present invention concerns the extraction of the essential oil from the leaves of the peumo tree (Cryptocarya alba), by means of steam distillation, using Clevenger equipment. The resulting fractions were later identified through Gas Chromatography-Mass Spectrometry (GC-MS), where the main compounds of the peumo essential oil were found to be: α-terpineol, eucalyptol and β-felandrene (Figure 1).

A second preferred embodiment established the effectiveness of peumo essence by way of an *in vivo* study. First, toxicity assays were conducted on bees, whose results confirmed that the essential oil was harmless to melliferous bees. The effectiveness against *Nosema ceranae* was subsequently assessed, presenting a dose-dependent effect.

The first stage was to collect fresh leaves from peumo trees with the botanical characteristics for the species in the study area, which is detailed in Table 1.

**Table 1. Plant species and corresponding locality**

| **Native plant species** | **Locality** |
|---|---|
| peumo (*Cryptocarya alba* Mol., Lauraceae) | Altos de Chicauma, Lampa, RM |

The harvest period for the leaves of the species under study was during anthesis, when most species have a higher content of essential oil. (Naghdi et al., 2004).

**Table 2. Plant species and harvest period**

| **Native plant species** | **Flowering date (bibliographic)** | **Harvest period** |
|---|---|---|
| Peumo | November to January | September 22, 2011 |

The collection and transport procedure involved collecting 7 kg of fresh leaves of *Cryptocarya alba Mol.*

The fresh peumo leaves were cleaned and washed to remove impurities and foreign matter. They were then fractured and subjected to a steam distillation process using an extraction unit consisting of an alembic, condenser and essence separator (see Figure 2). This equipment (with a capacity of 500g of the plant material) generates water vapor in a separate container from the plant material, so the latter is in contact only with the steam, thus avoiding the essence from decomposing (Bandoni, 2000). The procedure was repeated as many times as necessary to extract the essence from all the collected plant matter (8 7kg). Once the essential oil was obtained, its performance was calculated and stored protected from light, at a temperature between 4 to -20 °C in an inert nitrogen atmosphere.

### Figure 2. Condensation device, Clevenger

The yield of the resulting AE (essential oil essence) (Table 3) was 0.63%, which is in accordance with the results published by Avello Lorca *et al.* (2012).

**Table 3. Percentage yield (%) of essential oil (AE) obtained from peumo leaves**

| **ESSENTIAL OIL** | **ESSENTIAL OIL YIELD %** |
|---|---|
| Peumo | 0.63 |

The quality of the raw material (plant material) used to obtain an essential oil for beekeeping use is determined by applying the quality criteria set by the WHO (Solimene, 2007), where the collected plant material was analyzed as follows:
- Detection of foreign substances in the plant drug;
- Detection of toxic metals;
- Detection of microbiological pollutants.

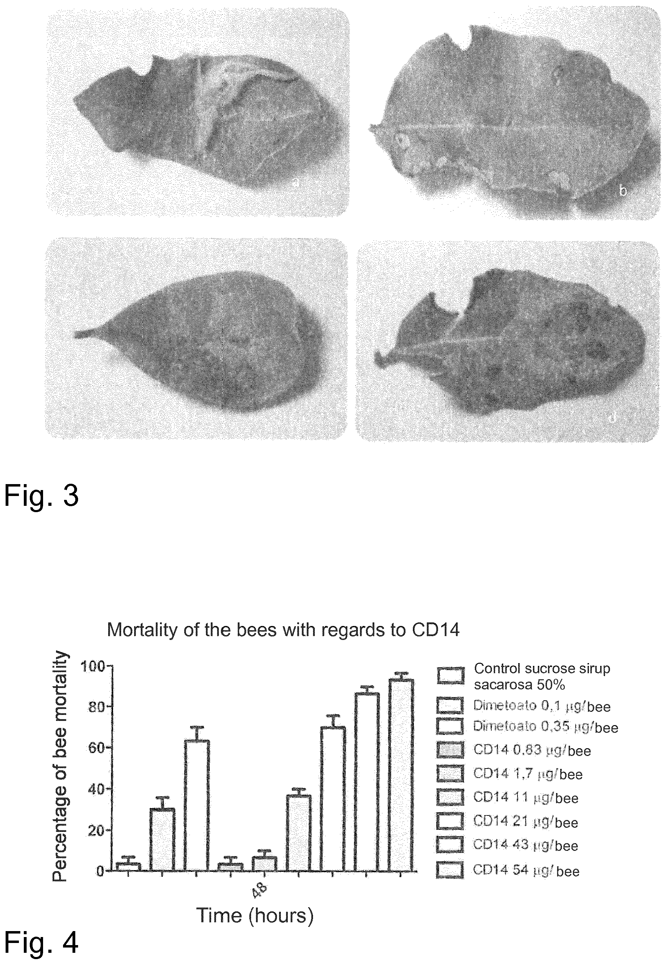

The detection of foreign substances consisted in finding insects, animal feces or other plant species in the plant drug (Solimene, 2007). This process was carried out at the Natural Products Laboratory of the Faculty of Chemical and Pharmaceutical Sciences, U. de Chile. The polluted leaves were not used in the essential oil production process (see Figure 3).

### Figure 3. Detection of foreign substances in peumo leaves.

The detection of toxic metals (copper, chromium, cadmium, lead and nickel) was performed by means of an atomic emission spectroscopy study (ICP-AES). This service was requested to the Chemical Analysis Center (CEQUC) of the Universidad Católica.

Table No. 4 shows the results obtained from the analysis of heavy metals in powdered peumo leaves.

It can be observed that the presence of heavy metals in plant material is within the limits allowed by Spanish law, according to Rosal *et al.,* (2007), (see Table No. 5).

On the other hand, according to the Food Safety Regulation DS 977/96 (SAG, 2009), the limits for heavy metals allowed in food are as follows: for cadmium, a limit of 0.5 mg/kg (end product), for copper a limit of 20 mg/kg and for lead, a limit of 2 mg/kg. The samples under study did not exceed the aforementioned limits.

**Table 4. Presence of heavy metals in the plant material from peumo leaves**

| *Finding (mg*/*kg of plant material)* | *Peumo leaves* |
|---|---|
| *Cadmium* | <1 |
| *Copper* | 7.5 |
| *Chrome* | < 1 |
| *Nickel* | < 1 |
| *Lead* | <1 |

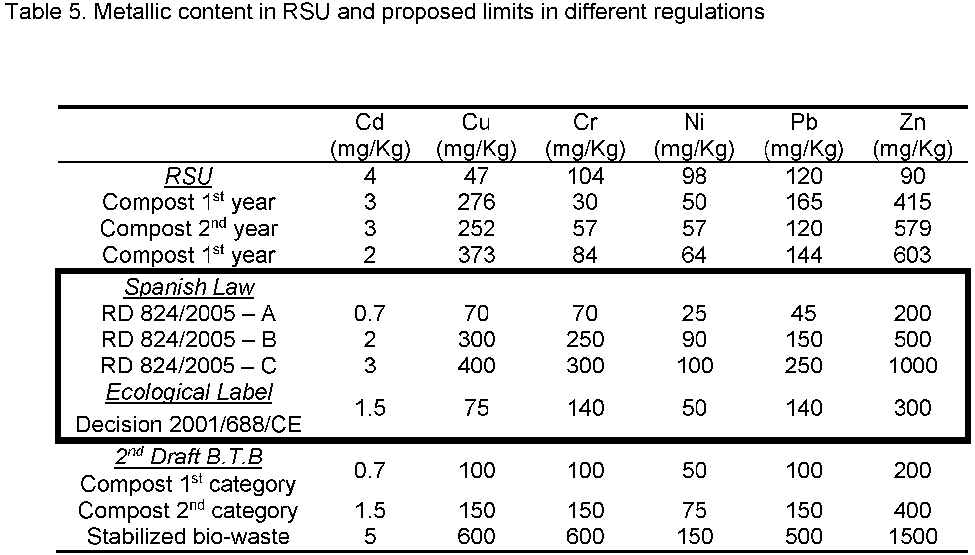

The detection of dioxins, furans and DL-PCBs was done by applying the EROD bioassay through the H4IIE cell culture (rat hepatoma, Whyte *et al.,* 2004; Valdovinos, 2009). The detection of the aforementioned xenobiotics was done at the Ecotoxicological Research Center (CIEMAYOR) of the Universidad Mayor.

The peumo leaf sample had a value of 0.15 TCDD-EQ/pg of sample (toxic equivalent of 2, 3, 7, 8-tetrachlorodibenzene-p-dioxin), so there was no dioxin contamination in the sample. It should be noted that the most frequently found dioxins in contaminated material are: polychlorinated dibenzo-p-dioxins (PCDDs), polychlorinated dibenzofurans (PCDFs) and dioxin-like polychlorinated biphenyls (DL-PCBs).

The H411E cell line bioassay is a useful, alternative and/or complementary tool to determine the presence of the aforementioned dioxins, both in plant material and in other matrices. According to Whyte *et al.,* (2004) the advantages of bioassays include the following:
(a) Having a common action mechanism is used to detect dioxins;
(b) The presence of cytochrome P4501A1-inducing compounds in the sample can be measured at the same time;
(c) The compounds can be assessed even at concentrations below the detection limit for chemical analysis;
(d) This analysis is cheaper than high-resolution gas chromatography coupled with high-resolution mass spectrophotometry (10-25%) (Schoffer *et al.,* 2011).

The detection of microbiological pollutants was done by determining the presence of *Staphylococcus aureus, Pseudomonas aeruginosa, Salmonella sp., Shigella sp., Escherichia coli,* fungi and yeasts. These analyses were carried out at the INTA of the Universidad de Chile, obtaining the results presented in Table 6.

**Table 6. Detection of microbiological pollutants in peumo leaves**

| **Parameter** | **Results** |
|---|---|
| NMP *E. coli* | < 3 *E. coli* UFC /g |
| Filamentous fungi | 60 × 10¹ UFC/g |
| Yeast fungi | 19 × 10³ UFC/g |
| *P. aeruginosa* | <100 UFC/g |
| S. *aureus* | <10 UFC/g |
| *Salmonella* sp | None |
| *Shigella* sp | None |

| | |
|---|---|
| UFC: colony-forming unit; NMP: most likely number | |

According to the Sanitary Food Regulation 977 (SAG, 2009) the following equal or higher values of the following pollutants are considered as health risks in food products: *E*. *coli* 10² UFC/g, filamentous fungi 10³ UFC/g, yeast fungi 5×10³ UFC/g, S. *aureus* 10² UFC/g, and for *Salmonella sp.* the limit is equal to 0 CFU/g. No reference values were found for P. *aeruginosa* and *Shigella sp.* For tea and herbal infusions only one limit value was found for Enterobacteriaceae 10³ UFC/g. According to these values, the samples of peumo and maitén leaves are within the permitted microbiological values, except in the case of maitén leaves, whose yeast fungi exceeded the aforementioned limit with a value of 33 × 10⁴ UFC/g.

As stated above, the plant material must be free of pollutants such as insects, feces, dust or any other type of agent.

Quality control seeks to ascertain the identity of the material, i.e. confirm that it is actually made of the part of the plant and the plant species in question. Furthermore, it must ensure that the plant material has the proper conservation and purity conditions to be sold; in other words, that it has not been altered, tampered with or that it does not exceed the limits for foreign substances and other pollutants (Bandoni, 2000).

*In vivo* toxicity testing of the essential oils and the majority compounds of these oils and their efficacy against *Nosema spp.* on bees (*Apis mellifera*) was conducted under laboratory conditions. Since treatments for bee diseases can often result in bee fatalities due to toxic effects, the amount of essential oil required to kill half of the bee population exposed to the product was evaluated. This procedure is known as *"**Determination of the Average Lethal Dose**"* (LD50) (Albo *et al.,* 2010; Gende *et al.,* 2009). The Acute Oral Toxicity Test for Bees, described in OECD Protocol 213, which is part of the OECD Guidelines for the Testing of Chemicals (OECD, 1998), was used for this activity. The test is a laboratory test designed to determine the acute oral toxicity of pesticides and other chemicals on worker bees.

Newborn bees were used in this test to avoid sensitivity issues or acquired tolerance in individuals. Ten bees were placed in 16cm-long aluminum mesh cages with a 4.5cm diameter, with a feeder at one end (Donovan and Elliot, 2001). The bees were kept in the dark at 32 ± 2° C with a relative humidity of 50 to 70%; however, the observations of the test results were performed under normal light conditions.

The tested essence was obtained from peumo leaves (*Cryptocarya alba Mol., Lauraceae*) as described earlier, and was mixed with a 50% w/v sucrose solution in a 1:1 ratio and delivered through a p-1000 micropipette tip (blue tip). The dose was delivered ad libitum. The bees were not fed for 2 hours prior to the start of the trial.

The number of concentrations and replicates met the statistical requirements for DL50 determination with 95% confidence limits. Five concentrations of a geometric series were used, with a factor below 2.2 and covering the DL50 range required for the test. According to OECD recommendations (1998), at least three replicates were considered for each concentration being tested as well as three controls, whose bees were fed only a 50% w/v sucrose solution. In addition, according to OECD (1998) requirements, a reference toxicant (dimethoate) was used to verify the expected response dose in the range of 0.10 to 0.35 µg/bee (Albo *et al.,* 2003).

The test lasted for 48 hours. Deaths were recorded at 4 hours after the start of the test, then at 24 and 48 hours. Finally, all abnormal behaviors observed during the test were recorded.

The *in vivo* laboratory assessment of the efficacy of essential oils and their majority compounds on *Nosema Apis* and *Nosema Ceranae* under laboratory conditions, was performed by orally inoculating healthy bees with spore loads of *Nosema spp.,* to determine the effectiveness of the essential oils (test performed in the Natural Products Laboratory of the Faculty of Chemical and Pharmaceutical Sciences, U. de Chile).

The steps were as follows:
A. Sampling of bees without nosemosis from the town of Buin, Metropolitan Region, Santiago, Chile. Newly hatched bees from hives were collected from the project partners' apiaries which confirmed the absence of *Nosema* spp. spores through field sampling and subsequent laboratory analysis.
B. Sampling bees without nosemosis from the Valparaiso Region, Chile, determining the spore load using light microscopy with Neubauer chamber and spore extraction (by macerating the abdomens of 30 bees in 5 mL of distillated water, obtained suspension was filtered to remove the remains of the exoskeleton of the bee and centrifuged at 1200 rpm for 10 min, and subsequently re-suspending the obtained pellet in 1 mL of distilled water) and later infecting healthy bees in the laboratory with an initial spore load (2.04 × 10⁶ spores(mL in 50% sucrose solution), each cage had 5 bees provided with 25 µL of this solution using a micropipette.
C. Detection and assessment of the presence of nosemosis in bees infected in the laboratory with the spores obtained in stage B.
D. The presence of the disease was determined by observing the clinical signs in the bees every 24 hours. These clinical signs include: initial excitability and subsequent lethargy and inactivity, loss of ability to fly and sting, increase food intake, decrease life span, and early mortality. (Bruno, 2003; De la Sota and Bacci, 2004).
E. Determining the spore load in the intestinal tract of bees after infestation for use in the effectiveness trial of the AE. One live bee was collected as a sample (in addition to the bees that were dying) from each cage to evaluate the development of the disease and of the spore load in the days following inoculation as recommended by Fries *et al.,* (1988), Higes *et al.,* (2007). This procedure was performed until day 12.
F. The remaining infected bees were used in the trial to determine the effectiveness of the AE performed in step E.
G. Determining the efficacy of the peumo AE against *Nosema* spp. 3 treatment groups consisting of 5 cages (with infected bees per cage except the control group consisting of healthy bees) were worked with. The 3 treatment group were:
   1. *Nosema* spp. group, positive control treated with fumagillin (C1),
   2. *Nosema* spp. group, negative control without treatment, to which only 50% w/v (C2) sucrose syrup was given,
   3. *Nosema* spp. Group, treated with the selected AE (T1).
H. The administration of the peumo AE, fumagillin and sucrose syrup (C2) took place on days 1, 4 and 8. The evolution of the treatment between the 3 groups was carried out by sampling on day 4 after the treatment, days 8 and 12 in order to determine the spore load by light microscopy with Neubauer chamber per groups of bees taking 1 cage with 5 bees at a time (Maistrello *et al.,* 2008).

Confirming the efficacy of the AE_{selec} at the point prior to the concentration that demonstrated to have a better effect on spore load.

The AE_{selec} in the previous paragraph (selected for its higher efficacy and higher yield) was assayed to confirm its activity against nosemosis using standardized tests in the Pathology Laboratory of the *Centro Agrario de Marchámalo,* Spain. Consequently, 3 groups of treatments were used, comprising 3 cages each and 35 bees/cage, born in laboratory, which, after a waiting period of 7 days, were infected with a load of 5 × 10⁴ spores per bee. Later, a waiting period of 5 days passed to begin the application of the treatment in the *ad libitum* feeding. (Higes, 2007; Higes *et al.,* 2010):
1. Group **without infection,** negative control (Nl)
2. Group **infected** with *Nosema* spp. spores, **untreated** positive control to which only 50% sucrose syrup with a 2% L-promoter (IST) shall be given,
3. Group **infected with** *Nosema* spp. **spores** treated with **peumo AE** (ICT).

To conduct this activity, it was necessary to have bees free of the disease and in a spore-free environment. In addition, hives with the disease were used to obtain positive samples and concentrate the spore load by centrifugation. (OIE, 2004).

### a.- Collection of bees free of Nosema spp. spores

Two frames were collected with late operculated breeding of hives from the *Centro Agrario de Marchámalo* by field sampling, and subsequent laboratory analysis showed no *Nosema* spp. Spores. These frames were transported to the laboratory and the hatching bees were placed in cages 16 cm long × 4 cm in diameter to be kept under controlled laboratory conditions considering room temperatures of 34 ± 1 °C, a relative humidity of 75 ± 5% and in a dimly lit room (Malone and Stefanovic, 1996;). Both environmental variables were monitored through the installation of an environmental thermohygrometer.

The collection procedure was carried out as recommended by Maistrello *et al.,* (2008); Malone *et al.,* (1995); Malone and Giacon, (1996), consisting of collecting the imagos that were born from the operculated cells and transferring them to the cages until completing a number of 35 individuals per unit, achieving 12 units in total. The collection of newborn bees was done every 24 hours (Fries, 1988).

Each unit was marked for individualization and fed 50% sucrose syrup plus 2% L-promoter as a source of protein and vitamins. The sucrose syrup was provided with a feeder mounted in the lid with a small hole in each cage (Huang *et al.,* 2007).

### b.- Collection of concentrated samples of Nosema spp. spores and PCR analysis.

On the one hand, the samples obtained from the beehives of the agricultural center were analyzed to identify the agent with which it would later be infected in the laboratory. On the other hand, the samples from the V Region of Valparaiso belonging to beehives of the towns of San Antonio, Limache and La Ligua were analyzed, corresponding to beehives that showed depopulation, presence of diseases in breeding, and weakening in general. This information was provided by Alianza Productiva INDAP-Agro Apilcutura Ltda, and had been used in the effectiveness trials mentioned above so as to identify the agent(s) present in samples from our country. Samples of these hives, made up of 60 foraging bees (those that collect food from the flowers), were collected and processed by macerating the abdomens of 30 bees in 5 mL of distilled water. The obtained suspension was filtered to remove the remains of the exoskeleton of the bee and centrifuged at 1200 rpm for 10-15 min, and subsequently re-suspending the obtained pellet in 1 mL of distilled water.

In order to purify and concentrate the samples with *Nosema* spp. spores, the grinding procedure was repeated in groups of 10 bees until reaching a total of 200 bees. After filtering these tissues by using Stomacher 80, the samples were centrifuged for 10 minutes at 2500 rpm and 4° C. The supernatant was discarded and 15 mL of PVP (polyvinylpyrrolidone, percoll^{®} Sigma) was added at 95%. A second centrifugation was carried out, but this time for 40 min at 11000 rpm and at a temperature of 10° C. The spore cloud is obtained with a Pasteur pipette and taken to a 15 mL tube, subsequently ultrapure double-distilled H₂O (Milli-q) was added to complete the volume and stirred in vortex. The spores were then washed, centrifuged at 2000 rpm for 10 minutes, part of the H₂O was removed and 1mL was retained. H₂O was added again until the volume was complete. The H₂O is pipetted out and the 1 mL sediment (pellet) is kept and transferred to 2 mL tubes. Ultrapure double-distilled H₂O (Milli-Q) was added to complete 2 mL. This was centrifuged for 10 min at 8200 rpm. Again, the supernatant was discarded with a micropipette and the sediment was retained, with a pipette, and 1 mL H₂O Milli-Q was added to the 2 mL tube and a concentrated and purified sample of *Nosema* spp. spores was consequently obtained. These samples were kept at room temperature until the moment they were used to prevent loss of virulence (Fries *et al.,* 2010, Stevanovic *et al.,* 2011).

Subsequently, the following two activities were carried out with the spore concentrate:
1) Determination of the spore load obtained in the previous step to be inoculated into healthy bees; and
2) PCR analysis for the specific identification of the agent(s) obtained from the bee samples.

### Spore detection and DNA extraction.

The pellet was analyzed by phase contrast microscopy, 40X, in a Nikon Eclipse 80i DIC (Differential Interference Contrast) optical microscope, to verify the presence of spores (OlE 2008). The spore count was performed in a Neubauer chamber (Cantwell *et al.,* 1970). This methodology was used to determine the presence or absence of spores belonging to *Nosema* spp. and to determine the spore load obtained in the spore purification and concentration stage. Part of the pellet (400 µL) was shaken together with 0.1 g of glass beads (2 mm diameter) 30 times per second (s) for 4 min in a TissueLyser (Qiagen) shaker to break the wall of any possible spores present. Subsequently, DNA was extracted (in triplicate) and 150 µL of each sample processed at 56 °C was previously incubated with 20 µL of proteinase K and 30 µL of buffer ATL (Qiagen) overnight. After incubation the DNA was extracted using the BioSprint^{™} 96 DNA Blood Kit (384) (Qiagen, Cat. No. 940057) on a Biosprint 96 robot (Qiagen) using the BS96_DNA_Tissue program. Once the extracts were obtained, the presence of *N*. *ceranae* and *N. apis* was analyzed using the polymerase chain reaction (PCR) technique.

The diagnosis technique used was a multiple PCR, in which the presence of *N. ceranae* and *N. apis* is detected in a single reaction (Martin-Hernandez *et al.,* 2007) and a fragment of the Cytochrome c Oxidase subunit I gene (COI) from *A. mellifera* is also amplified, which serves as internal control of the reaction.

PCR reactions were carried out in a Mastercycler ep gradient S (Eppendorf^{®}) thermal cycler in a total reaction volume of 25 µL, containing 2.5 µL of DNA extract, 2.5 µL of H₂O of PCR and 20 µL of the PCR mix containing the FastStart PCR Master polymerase 12.5 µL (Roche 04 710 452 001), 0.2mg/mL of bovine serum albumin, 0.1% of Triton X-100, 3 mM MgCl2, 0.4 µM of 218MITOC and 321APIS primers and 0.03 µM of COI primers (see Table 1). The program at the thermal cycler consisted of 94°C for 2 min, followed by 10 cycles of 15 s at 94°C, 30 s at 61.8°C, and 45 s at 72°C, 20 cycles of 15 s at 94°C, 30 s at 61.8°C, 50 s at 72°C, about 5 s of elongation for each cycle and a final extension step of 72°C for 7 min. Together with the samples, the negative control (distilled H₂O) was processed in parallel to detect possible contamination in the PCR phase and positive control corresponding to *N. apis* and *N. ceranae* patterns. (Martin-Hernandez *et al.,* 2007).

PCR analysis was performed to identify the etiological agent present in the *N. apis* or *N*. *ceranae* samples and purify by the type of agent to subsequently infect healthy bees, for which the selected primers are shown in Table 7.

**Table 7. Primers selected to detect the presence of N. cerenae, N. apis and A. mellifera**

| PRIMER | SEQUENCE^{a} | PCR PRODUCT SIZE (pb) | SPECIFICITY |
|---|---|---|---|
| 218MITOC-FOR | 5'-CGGCGACGATGTGATATGAAAATATTAA-3' | 218-219^{b} | *N. ceranae* |
| 218MITOC-REV | 5'-CCCGGTCATTCTCAAACAAAAAACCG-3' | | |
| 321APIS-FOR | 5'-GGGGGCATGTCTTTGACGTACTATGTA-3' | 321 | *N. apis* |
| 321APIS-REV | 5'-GGGGGGCGTTTAAAATGTGAAACAACTATG-3' | | |
| COI-FOR | 5'-GGGTCCAAGACCAGGAACTGGAT-3' | 118 | *A. mellifera* |
| COI-REV | 5'-GCGCGGAAATTCCTGATATATGAAGAGAAAA-3' | | |

| | | | |
|---|---|---|---|
| (a). The CG tails added to the primers are underlined; (b) There is 1 bp (base pair) difference in the size of the amplicons (product of artificial replication) obtained from *N. ceranae* depending on the different sequences for this species available in GenBank. (http://www.ncbi.nlm.nih.gov) | | | |

A study of the innocuousness of the CD14 (peumo AE) was carried out, the results of which are shown in Figure 4, where the lethal dose 50 (LD₅₀) that causes death in 50% of the bee population exposed to this product was determined (Albo *et al.,* 2010; Gende *et al.,* 2009). LD₅₀ was calculated using a linear regression model at different time intervals (4, 24 and 48 hours), Figure 4 shows the percentage of bee mortality with the 6 different CD14 doses (0.83; 1.7; 11; 21; 43; 54 µg/bee), the reference toxicant applied in two doses (dimethoate 0.1; 0.35 µg/bee) and a control fed with 50% sucrose syrup.

| | |
|---|---|
| • at 4 hours, | LD₅₀ = 7.1 µg/bee. |
| • at 24 hours, | LD₅₀ = 5.5 µg/bee. |
| • at 48 hours, | LD₅₀ = 5.7 µg/bee. |

Figure 4. Percentage of bee mortality with the 6 different doses of CD14 (0.83; 1.7; 11; 21; 43; 54 µg/bee), the reference toxicant applied in two doses (dimethoate 0.1; 0.35 µg/bee) and a control fed with 50% sucrose syrup.

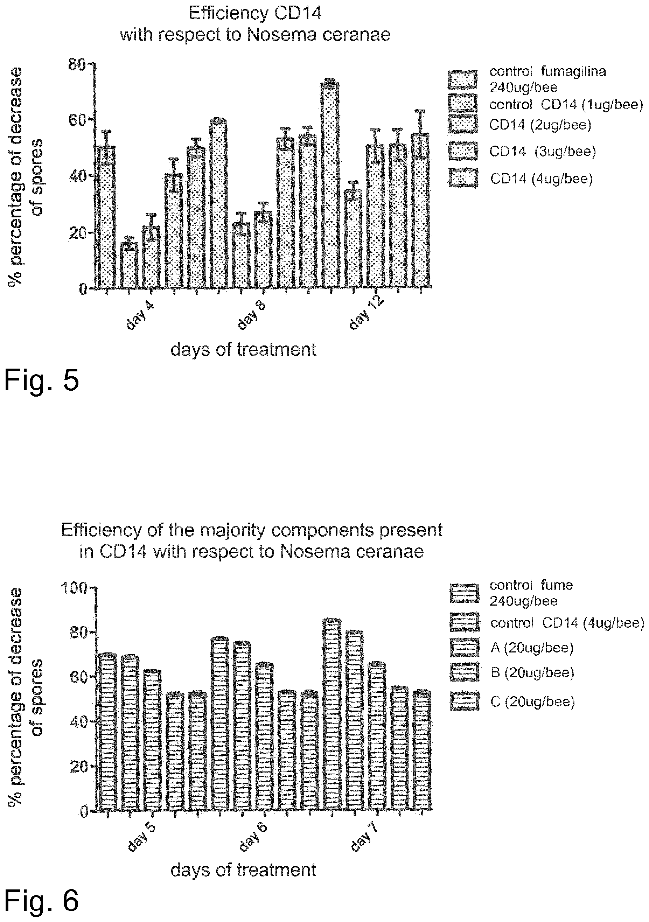

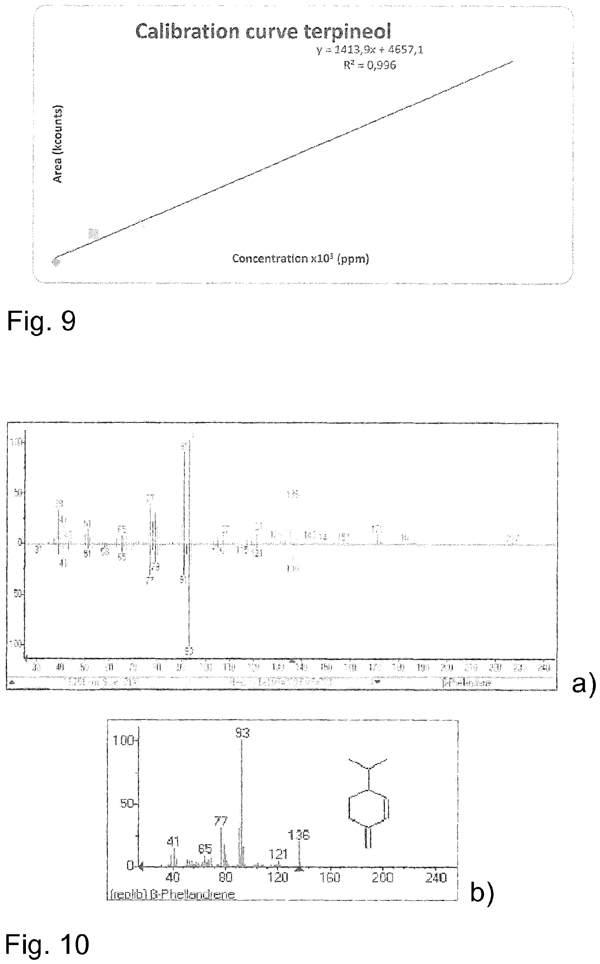

In relation to the effectiveness studies of the essential oil against *Nosema ceranae,* the following aspects can be concluded from the results obtained:
i) It was most effective in reducing spore load on days 4, 8, and 12 after treatment (see Figure 5);
ii) The effectiveness of the treatment using the doses of 1, 2, 3 and 4 ug/bee was calculated according of the percentage of spore decrease of *Nosema ceranae* with respect to the control group (bees treated with fumagillin);
iii) An ANOVA test established that there was a significant difference (p < 0.0001) between the group treated with CD14 and the control group. It was also demonstrated that the effect of CD14 as an antifungal was dose-dependent (see Figure 5); and
iv) CD14 inhibited the growth of *N. ceranae* spores (p = 0.0001) by about 80% on day 7 similar to that presented by the reference drug fumagillin. It is important to note that the efficacy of CD14 was significantly higher than that of the majority compounds evaluated; this could be explained by the contribution to the antifungal effect of the different monoterpenes that make up CD14 (see Figure 10). In addition, it should be noted that according to the results of the efficacy studies of the formulation, the treatment should be carried out for 7 days, and may be repeated for the same period of time if the symptoms of the disease remain in the hive, and after the end of the treatment the hives should be observed for 7 days to confirm the eradication of the nosemosis, and the treatment may be repeated for a period of 7 more days.

**Figure 5****.** Effectiveness of CD14 calculated as a percentage of spore reduction on days 4, 8, and 12 of treatment at different doses (1, 2, 3, and 4 µg/bee). The reference drug (fumagillin) was applied at a dose of 240µg/bee.

**Figure 6****.** Effectiveness of CD14 indicated as a percentage of spore reduction on days 5, 6 and 7 days of treatment at a daily dose of CD14, of 4µg/bee and 20 µg/bee of the majority of the evaluated monoterpenes. The reference drug (fumagillin) was applied at a dose of 240µg/bee.

Regarding the data obtained in *in vivo* laboratory studies, this product based on peumo essential oil can be used to prevent or treat (cure) nosemosis in two forms of presentation, both oral and aerosol. One of the oral formulations will be applied using as a vehicle sucrose syrup at 50% and applied in a feeder in the hive. The formulation in aerosol form will be applied using suitable excipients, solvents, thickeners, solubilizers, sweeteners, preservatives and propellants; for which the following are preferentially used: a) as a solubilizer: a High HLB surfactant, such as Cremophor RH 40, Tween 20, Cremophor RH 60, Cremophor RH 455; b) as solvents: water, glycerin, ethanol or mixtures thereof; c) as a thickener: cellulose derivatives, such as carboxymethyl cellulose, methyl cellulose, hydroxyethyl cellulose; d) as a sweetener: saccharin and sucrose are used; and d) as a propellant: propane/butane is used, or a container with a spray nozzle may also be used to avoid the use of propellants.

Consequently, the results obtained with CD14 (peumo AE), allow the development of a veterinary product with CD14-based natural active ingredients with an anti-nosemosis effect and that applied to hives infected with *Nosema ceranae* exhibits the greatest effectiveness as an antifungal, without leaving residues in the products of the hive. The veterinary product is developed through two forms of administration: (a) aerosol (Pa-CD14) and (b) syrup (Pj-CD14). The first is to be applied by spraying and the second by being placed directly in a feeder in the hive to be ingested by the bees. The objective of developing two forms of administration is to determine the form of presentation that exhibits the greatest effectiveness as an antifungal, and in future studies it is intended to prove that they are harmless to *Apis mellifera* and do not leave residues in the products of the hive, namely, honey and propolis obtained from the hives treated.

On the other hand, the majority compounds present in the essential oil of peumo were quantified through GC, for this purpose the calibration curve was constructed with each of the standards at different concentrations. The corresponding standards were acquired in SIGMA ALDRICH^{®} (99.9% purity).

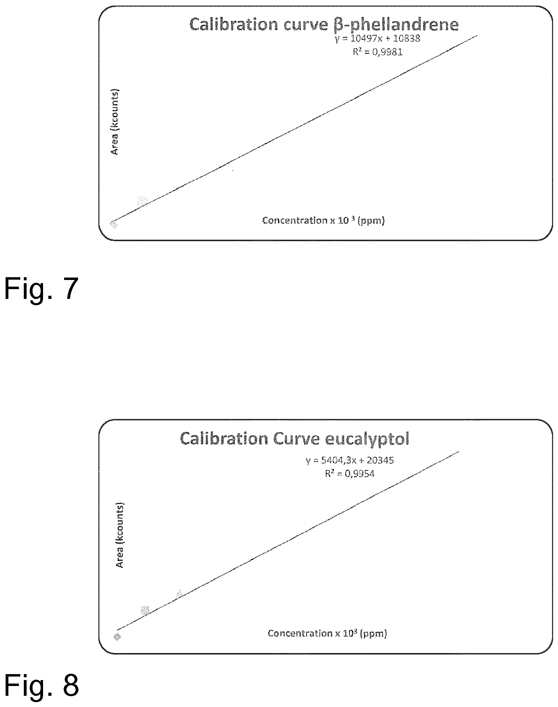

From the calibration curve with the standard of β-phellandrene (see Figure 7) it was possible to determine the concentration of this monoterpene in the essential oil of peumo corresponding to 14262 ppm, for eucalyptol the concentration corresponding to 87799 ppm was determined and for α-terpineol (see Figure 8) the concentration in peumo oil was 13509 ppm (see Figure 9).

### Figure 7. Calibration curve with the β-phellandrene standard

### Figure 8. Calibration curve with the eucalyptol standard

### Figure 9. Calibration curve with the α-terpineol standard

Table 8 shows a summary of the components determined by GC-MS of the essential oil of the leaves of the peumo tree and their respective calculated Kovats indexes (I cal) and literature (I lit).

**Table 8. Components of the peumo essential oil (main compounds highlighted in bold)**

| **Frac. No.** | **Retention time (min)** | **CAS** | **I cal** | **I lit** | **[M+]** | **Fragments** | **Compounds** |
|---|---|---|---|---|---|---|---|
| 1 | 14.5 | 99-83-2 | - | 1007 | 136 | 91 (100), 93 (62), 77 (52) | α-phellandrene |
| 2 | 14.8 | 7785-70-8 | 1025 | 939 | 136 | 91 (100), 93 (88), 92 (50) | 1R-α-pinene |
| 3 | 15.7 | 79-92-5 | 1041 | 953 | 136 | 44 (100), 40 (77), 39 (46) | Camphene |
| **4** | **17** | **555-10-2** | **1081** | **1035** | **136** | **93 (100), 91 (88), 136 (42)** | **β-phellandrene** |
| 5 | 17.3 | 18172-67-3 | 1012 | 981 | 136 | 93 (100), 91 (80), 39 (51) | β-pinene |
| 6 | 19.5 | 586-62-9 | 1085 | 1088 | 136 | 40 (100), 44 (85), 93 (49) | Terpinolene |
| 7 | 19.9 | 527-84-4 | 1067 | 1014 | 134 | 119 (100), 91 (29), 134 (19) | Ocimol |
| 8 | 20.1 | 5989-54-8 | 1050 | 1031 | 136 | 67 (100), 93 (67), 91 (50) | Limonene |
| **9** | **20.3** | **470-82-6** | **1013** | **1030** | **154** | **43 (100), 93 (80), 81 (62)** | **Eucalyptol** |
| 10 | 21.7 | 99-85-4 | 1035 | 1057 | 136 | 91 (100), 93 (88), 40 (60) | γ-terpinene |
| 11 | 24.3 | 54410-94-5 | 1053 | 1116 | 170 | 68 (100), 57 (43), 41 (39) | 3 methyl 3 butenyl 3 methyl butanoate |
| 12 | 26.6 | 562-74-3 | 1079 | 1177 | 154 | 37 (100), 38 (43), 40 (12) | 4-terpineol |
| **13** | **27.2** | **98-55-8** | **1009** | **1189** | **154** | **93 (100), 59 (90), 121 (86)** | **α-terpineol** |
| 14 | 33.3 | 17699-05-7 | 1580 | 1434 | 204 | 93 (100), 41 (88), 119 (85) | α-bergamolene |
| 15 | 34.8 | 339154-91-5 | 1575 | 1430 | 204 | 121 (100), 93 (69), 41 (63) | γ-elemene |
| 16 | 35.3 | 483-77-2 | 1515 | 1523 | 202 | 159 (100), 40 (24), 160 (13) | Calamine |
| 17 | 38.1 | 473-15-4 | 1733 | 1645 | 222 | 59 (100), 149 (46), 108 (25) | B-eudesmol |
| 18 | 36.5 | - | - | - | - | - | Unidentified |

The presence of 39 compounds was established via chromatographic analysis by GC-MS, of which 18 are considered important, considering three majority compounds: β-phellandrene (16.28%), eucalyptol (23.27%) and α-terpineol (27.38%) in the essential oil of C. *alba.*

The presence of 3 main compounds present in the peumo essential oil was determined by comparing the obtained mass spectra with the spectra of the NIST 2008 database. These are observed in Figures 10, 11 and 12 corresponding to the monoterpenes β- phellandrene (with a peak at its [M]⁺ 136), eucalyptol (with a peak at its [M]⁺ 154) and α- terpineol (with a peak at its [M]⁺ 154).

Figure 10: Mass spectrum corresponding to: a) comparison of the essence spectrum, in red, and the mass spectrum of the NIST 2008 database for β- phellandrene, in blue, b) mass spectrum of β-phellandrene according to NIST 2008 database.

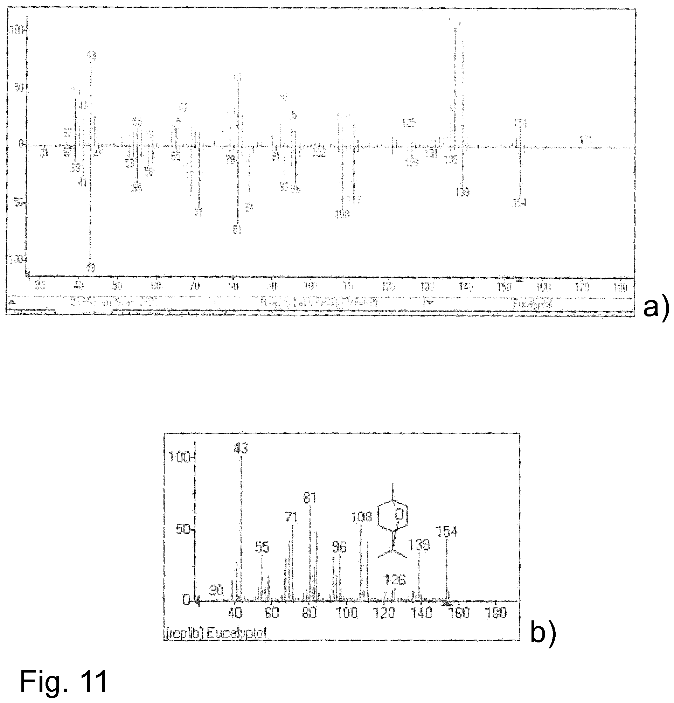

Figure 11: Mass spectrum corresponding to: a) comparison of the essence spectrum, in red, and the mass spectrum of the NIST 2008 database for eucalyptol, in blue, b) mass spectrum of eucalyptol according to NIST 2008 database.

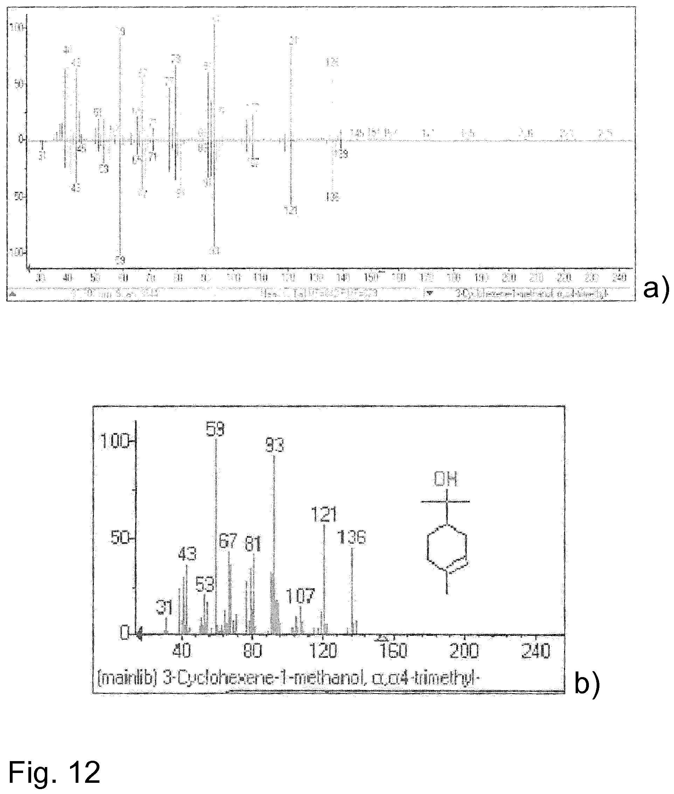

Figure 12: Mass spectrum corresponding to: a) comparison of the essence spectrum, in red, and the mass spectrum of the NIST 2008 database for α- terpineol, in blue, b) mass spectrum of α- terpineol according to NIST 2008 database.

## Claims

1. A formulation suitable for the control or prevention of infection by *Nosema ceranae* in *Apis mellifera* bees, wherein said formulation comprises:
i) α-terpineol, eucalyptol and β-phellandrene as the main active compounds;
ii) minor compounds from essential oil of peumo (*Cryptocaria alba*) leaves; and
iii) excipients for syrup or aerosol administration.

2. The formulation of claim 1, wherein said excipient for syrup administration is sucrose at 25% w/v and it is suitable to be delivered through a feeder in the hive.

3. The formulation of claim 1, wherein said excipient for aerosol administration is selected from solvents, thickeners, solubilizers, sweeteners, preservatives and propellants.

4. The formulation of claim 3, wherein said solubilizer is selected from PEG-40 Hydrogenated Castor Oil, Polysorbate 20, PEG-60 Hydrogenated Castor Oil, and PEG-40 Hydrogenated Castor Oil/Propylene glycol/Water.

5. The formulation of claim 3, wherein said solvent is selected from water, glycerin, ethanol, and any combination thereof.

6. The formulation of claim 3, wherein said thickener is selected from carboxymethyl cellulose, methylcellulose, and hydroxyethyl cellulose.

7. The formulation of claim 3, wherein said sweetener is selected from saccharin and sucrose.

8. The formulation of claim 3, wherein said propellant are hydrocarbons such as propane/butane.

9. A formulation for use in the control or prevention of infection by *Nosema ceranae* in *Apis mellifera* bees, the formulation comprising:
i) α-terpineol, eucalyptol and β-phellandrene as the main active compounds;
ii) minor compounds from essential oil of peumo (*Cryptocarya alba*) leaves; and
iii) excipients for syrup or aerosol administration

10. Formulation for use according to claim 9, wherein the formulation is administered to a hive at a concentration of 4 µg to 8 µg of formulation per bee.

11. Formulation for use according to claim 9, wherein the formulation is administered for at least seven days and up to fourteen days.

## Patentansprüche

1. Formulierung, die für die Bekämpfung oder Vorbeugung einer Infektion mit *Nosema ceranae* bei *Apis mellifera*-Bienen geeignet ist, wobei die Formulierung umfasst:
(i) α-Terpineol, Eucalyptol und β-Phellandren als Hauptwirkstoffe;
(ii) Nebenbestandteile von einem ätherischen Öl aus Peumo (*Cryptocaria alba*)-Blättern; und
(iii) Exzipienten für die Verabreichung als Sirup oder Aerosol.

2. Formulierung nach Anspruch 1, wobei der Exzipient für die Sirup-Verabreichung Saccharose mit 25% (Gew./Vol.) ist und geeignet ist, über einen Feeder in den Bienenstock abgegeben zu werden.

3. Formulierung nach Anspruch 1, wobei der Exzipient für die Aerosol-Verabreichung eines ausgewählt ist aus Lösungsmitteln, Verdickungsmitteln, Solubisierungsmitteln, Süßungsmitteln, Konservierungsmitteln und Treibmitteln.

4. Formulierung nach Anspruch 3, wobei das Solubisierungsmittel aus gewählt ist aus PEG-40-hydriertem Rizinusöl, Polysorbat 20, PEG-60-hydriertem Rizinusöl und PEG-40-hydriertem Rizinusöl/Propylenglycol/Wasser.

5. Formulierung nach Anspruch 3, wobei das Lösungsmittel ausgewählt ist aus Wasser, Glycerin, Ethanol und einer beliebigen Kombination davon.

6. Formulierung nach Anspruch 3, wobei das Verdickungsmittel ausgewählt ist aus Carboxymethylcellulose, Methylcellulose und Hydroxyethylcellulose.

7. Formulierung nach Anspruch 3, wobei das Süßungsmittel ausgewählt ist aus Saccharin und Saccharose.

8. Formulierung nach Anspruch 3, wobei das Treibmittel Kohlenwasserstoffe wie Propan/Butan ist.

9. Formulierung zur Verwendung bei der Bekämpfung oder Vorbeugung einer Infektion mit *Nosema ceranae* bei *Apis mellifera*-Bienen*,* wobei die Formulierung umfasst:
(i) α-Terpineol, Eucalyptol und β-Phellandren als Hauptwirkstoffe;
(ii) Nebenbestandteile von einem ätherischen Öl aus Peumo (*Cryptocaria alba*)-Blättern; und
(iii) Exzipienten für die Verabreichung als Sirup oder Aerosol.

10. Formulierung zur Verwendung nach Anspruch 9, wobei die Formulierung einem Bienenstock mit einer Konzentration von 4 µg bis 8 µg Formulierung pro Biene verabreicht wird.

11. Formulierung zur Verwendung nach Anspruch 9, wobei die Formulierung mindestens sieben Tage und bis zu 14 Tage lang verabreicht wird.

## Revendications

1. Formulation adaptée pour la lutte contre une, ou la prévention d'une, infection par *Nosema ceranae* chez les abeilles *Apis mellifera,* dans laquelle ladite formulation comprend :
i) de l'α-terpinéol, de l'eucalyptol et du β-phellandrène en tant que composés actifs principaux ;
ii) des composés mineurs d'huile essentielle de feuilles de peumo *(Cryptocarya alba) ;*
et
iii) des excipients pour une administration de sirop ou d'aérosol.

2. Formulation selon la revendication 1, dans laquelle ledit excipient pour une administration de sirop est le sucrose à 25 p/v et est adapté à être délivré par l'intermédiaire d'un dispositif d'alimentation dans la ruche.

3. Formulation selon la revendication 1, dans laquelle ledit excipient pour une administration d'aérosol est sélectionné parmi des solvants, des épaississants, des solubilisants, des édulcorants, des conservateurs et des propulsifs.

4. Formulation selon la revendication 3, dans laquelle ledit solubilisant est sélectionné parmi le PEG-40 huile de ricin hydrogénée, le polysorbate 20, le PEG-60 huile de ricin hydrogénée, et le PEG-40 huile de ricin hydrogénée/propylène glycol/eau.

5. Formulation selon la revendication 3, dans laquelle ledit solvant est sélectionné parmi l'eau, la glycérine, l'éthanol, et toute combinaison de ceux-ci.

6. Formulation selon la revendication 3, dans laquelle ledit épaississant est sélectionné parmi la carboxyméthylcellulose, la méthylcellulose, et l'hydroxyéthyl cellulose.

7. Formulation selon la revendication 3, dans laquelle ledit édulcorant est sélectionné parmi la saccharine et le sucrose.

8. Formulation selon la revendication 3, dans laquelle ledit propulsif est des hydrocarbures tels que le propane/butane.

9. Formulation pour son utilisation dans la lutte contre une ou la prévention d'une infection par *Nosema ceranae* chez les abeilles *Apis mellifera,* la formulation comprenant :
i) de l'α-terpinéol, de l'eucalyptol et du β-phellandrène en tant que composés actifs principaux ;
ii) des composés mineurs d'huile essentielle de feuilles de peumo *(Cryptocarya alba) ;*
et
iii) des excipients pour une administration de sirop ou d'aérosol.

10. Formulation pour son utilisation selon la revendication 9, dans laquelle la formulation est administrée à une ruche en une concentration de 4 µg à 8 µg de la formulation par abeille.

11. Formulation pour son utilisation selon la revendication 9, dans laquelle la formulation est administrée pendant au moins sept jours et au plus quatorze jours.
